# EUROPÄISCHE PATENTANMELDUNG

(11) **EP 1 862 289 A2**
(43) Veröffentlichungstag der Anmeldung: **05.12.2007**
(21) Anmeldenummer: 07108688.8
(22) Anmeldetag: 22.05.2007
(51) Int. Cl.: B29C 41/22, B41N 1/12, B29C 70/72, B29C 41/04

(54) **Druckform mit flexibler Oberfläche**

(30) Priorität: 02.06.2006 DE 102006026266
(71) Anmelder: Van der Velden & Kesper B.V., NL-5431 NZ Cuijk (NL)
(72) Erfinder: Van der Velden, Henk, 5431, Cuijk (NL)
(74) Vertreter: Cohausz & Florack

(57) **Zusammenfassung**

Die Erfindung betrifft eine nahtlose Druckform für den Rotationsdruck, insbesondere für den Flexodruck, mit einer Stützkonstruktion (2), mit einer auf der Stützkonstruktion (2) befindlichen elastischen, schaumartigen Trägerschicht (9) und mit einer auf der Trägerschicht (9) befindlichen elastischen Deckschicht (8). Weiter betrifft die Erfindung ein Verfahren zur Herstellung einer nahtlosen Druckform für den Rotationsdruck. Die Aufgabe besteht darin, eine nahtlose Druckform für den Rotationsdruck zur Verfügung zu stellen, welche flexibel einsetzbar ist und durch welche gleichzeitig eine hohe Zeit- und Kostenersparnis erzielt wird. Dies wird dadurch gelöst, dass auf der elastischen Deckschicht (8) mindestens eine weitere elastische Deckschicht (7) angeordnet ist.

## Beschreibung

Die Erfindung betrifft eine nahtlose Druckform für den Rotationsdruck, insbesondere für den Flexodruck, mit einer Stützkonstruktion, mit einer auf der Stützkonstruktion befindlichen elastischen, schaumartigen Trägerschicht und mit mindestens einer auf der Trägerschicht befindlichen elastischen Deckschicht. Weiter betrifft die Erfindung ein Verfahren zur Herstellung einer nahtlosen Druckform für den Rotationsdruck.

Eine nahtlose Druckform dieser Art ist sowohl aus der europäischen Patentanmeldung mit der Anmeldenummer 05 005 124.2 als auch aus der europäischen Patentschrift EP 0 671 253 B1 bekannt.

Die aus dem Stand der Technik bekannten Druckformen für den Rotationsdruck weisen eine zylinderförmige Stützkonstruktion mit einer elastischen Beschichtung auf, welche meist aus einer elastischen, schaumartigen Trägerschicht und einer auf dieser Trägerschicht angeordneten weiteren elastischen Gummischicht besteht. In diese Gummischicht wird das gewünschte Druckmotiv eingraviert.

Nachteilig an diesem aus dem Stand der Technik bekannten zweilagigen Schichtaufbau der Druckformen ist, dass in die Gummischicht lediglich einmal ein Druckmotiv eingraviert werden kann, so dass die Druckform an sich nur für ein zu druckendes Motiv eingesetzt werden kann.

Soll das Druckmotiv geändert werden, so muss die komplette Druckform durch eine neue Druckform ausgetauscht werden, was zu hohen Kosten führt. Zudem ist der Verschleiß dieser Gummischicht relativ hoch, so dass die Druckform auch ohne eines Druckmotivwechsels häufig ausgewechselt werden muss, was ebenfalls zu hohen Kosten führt.

Ausgehend von dem erläuterten Stand der Technik liegt der Erfindung die Aufgabe zu Grunde, eine nahtlose Druckform für den Rotationsdruck zur Verfügung zu stellen, welche flexibel einsetzbar ist und durch welche gleichzeitig eine hohe Zeit- und Kostenersparnis erzielt wird.

Gemäß einer ersten Lehre der Erfindung ist die zuvor hergeleitete und aufgezeigte Aufgabe, eine nahtlose Druckform für den Rotationsdruck zur Verfügung zu stellen, dadurch gelöst, dass auf der auf der Trägerschicht befindlichen elastischen Deckschicht mindestens eine weitere elastische Deckschicht angeordnet ist. Die Anzahl der Deckschichten einer Druckform wird im Wesentlichen durch die aus der Anzahl der Deckschichten resultierenden Umfangsänderung der Druckform limitiert.

Zunächst wird auf die oberste Deckschicht der Druckform ein Druckmotiv aufgebracht. Soll das Druckmotiv geändert werden oder weist diese außenliegende Deckschicht nicht mehr die geforderte Qualität auf, so wird diese Deckschicht von der Druckform entfernt, so dass die darunter liegende Deckschicht nun die oberste Deckschicht darstellt. In diese nun oberste Deckschicht kann wieder ein neues Druckmotiv eingraviert werden. Durch die mehrschichtige Anordnung von Deckschichten auf der Druckform kann die Druckform mehrfach verwendet werden, so dass es nicht mehr notwenig ist, beim Wechseln des Druckmotivs die gesamte Druckform auszuwechseln, was zu einer erheblichen Zeit- und Kostenersparnis führt. Die Druckform ist damit flexibel einsetzbar und es wird eine schnelle und einfache Anpassung der Druckform an den Produktionsprozess erzielt.

In einer vorteilhaften Ausführungsform der Erfindung sind die Deckschichten voneinander peelbar. Dadurch können die einzelnen Deckschichten leicht und schnell voneinander abgelöst bzw. abgezogen werden, ohne dass bei der Entfernung der obersten Deckschicht die darunter liegende Deckschicht beschädigt wird, so dass die oberste Deckschicht der Druckform immer eine glatte Oberfläche aufweist. Dadurch, dass die Deckschichten peelfähig sind, werden auch keine weiteren zusätzlichen Mittel zum Ablösen der einzelnen Deckschichten benötigt. Die Peelfähigkeit wird dadurch erreicht, dass bei der Herstellung einer Druckform die einzelnen Deckschichten nicht direkt hintereinander in den Hohlraum eingebracht werden, sondern dass eine in den Hohlraum eingebrachte Deckschicht erst eine bestimmte Zeit lang aushärtet, bevor die nächste Deckschicht eingebracht wird. Je länger die Dauer dieser Härtezeit gewählt wird, desto leichter sind die Deckschichten später voneinander peelbar. Jedoch darf die Dauer der Härtezeit auch nicht zu lange gewählt werden, da die Haftung zwischen den Deckschichten dadurch zu stark reduziert werden kann, so dass sich die Deckschichten durch den beim Drucken auf der Druckform aufgebrachten Druck bereits beim Drucken voneinander lösen können.

Ferner wird dadurch, dass jede Deckschicht gemäß einer weiteren vorteilhaften Ausgestaltung der Erfindung eine größere Dicke aufweist als die Gravurtiefe des in die Deckschichten zu gravierenden Druckmotivs, sichergestellt, dass beim Gravieren des Druckmotivs auf die oberste Deckschicht die darunter liegende Deckschicht nicht beschädigt wird.

Dadurch, dass gemäß einer weiteren vorteilhaften Ausgestaltung der Erfindung die Trägerschicht und die Deckschichten aus Silikon bestehen, ist das Druckmotiv leicht in die Deckschichten gravierbar und es wird eine hohe Detailgenauigkeit beim Abbilden des Druckmotivs erreicht.

Eine weitere vorteilhafte Ausführungsform der Erfindung besteht darin, dass zwischen den Deckschichten jeweils eine Peelschicht angeordnet ist. Durch die zusätzlich zwischen den Deckschichten angeordnete Peelschicht wird erreicht, dass die Deckschichten leichter voneinander trennbar sind. Zudem wird eine schnellere Herstellung der Druckform ermöglicht, da die Härtezeit, die zwischen dem Aufbringen einer neuen Deckschicht auf eine bereits in der Druckform befindlichen Deckschicht benötigt wird, reduziert werden kann.

Gemäß einer zweiten Lehre der Erfindung betrifft die Erfindung ein Verfahren zur Herstellung einer nahtlosen Druckform für den Rotationsdruck, insbesondere für den Flexodruck, bei welchem eine zylinderförmige Stützkonstruktion koaxial in eine zylinderförmige Gießform eingebracht wird, wobei ein Hohlraum zwischen der Außenfläche der Stützkonstruktion und der Innenwand der Gießform erzeugt wird, der Hohlraum durch jeweils ein an den Enden der Stützkonstruktion angebrachtes Ringelement seitlich abgeschlossen wird, elastisches Material in Form einer Trägerschicht und mindestens einer Deckschicht in den Hohlraum eingebracht wird und wobei dadurch, dass die Stützkonstruktion gemeinsam mit der Gießform in Rotation versetzt wird, das elastische Material aufgrund der Zentrifugalkraft gleichmäßig in dem Hohlraum verteilt wird.

Die oben hergeleitete und aufgezeigte Aufgabe wird gemäß der zweiten Lehre der Erfindung dadurch gelöst, dass mindestens eine weitere Schicht des elastischen Materials in Form einer Deckschicht in den Hohlraum eingebracht wird.

Zu den Vorteilen des Verfahrens gemäß der zweiten Lehre der Erfindung kann auf die oben aufgeführten Vorteile der nahtlosen Druckform gemäß der ersten Lehre der Erfindung verwiesen werden. Zudem wird dadurch, dass die Herstellung der Druckform bzw. die Aufbringung der einzelnen Schichten auf die Stützkonstruktion in einer einzigen Form, welche aus einem aus der Innenwand der Gießform und der Außenfläche der Stützkonstruktion gebildeten Hohlraum besteht, erfolgt, eine einfache und kostengünstige Herstellung der Druckform ermöglicht.

Nach einer vorteilhaften Ausführungsform dieses Verfahrens werden in einem ersten Schritt die einzelnen Deckschichten jeweils nacheinander in den Hohlraum eingebracht, wobei für jeweils eine Deckschicht elastisches Material in den Hohlraum in eine zumindest den Hohlraum nicht ausfüllenden Menge eingebracht und die so erhaltene Deckschicht ausgehärtet wird. Nachdem eine bestimmte Menge des elastischen Materials, vorzugsweise Silikon, in den Hohlraum eingebracht wurde, wird die Gießform zusammen mit der Stützkonstruktion und den Ringelementen in Rotation versetzt, so dass sich das Material durch die Zentrifugalkraft gleichmäßig an der Innenwand der Gießform verteilt, wodurch eine glatte, geschlossene Deckschicht entsteht, die in einem nächsten Schritt aushärtet. Dadurch, dass die Deckschicht an der glatten Innenfläche der Gießform ausgeformt wird, besitzt auch die fertige Deckschicht eine glatte Außenfläche, bei der der sonst üblicherweise notwendige kosten- und zeitintensive Fertigungsschritt des Schleifens der Deckschicht zur Erzeugung einer glatten Außenschicht der Druckform nicht mehr notwendig ist.

Das elastische Material kann dabei entweder über in den Ringelementen befindliche Bohrungen in den Hohlraum eingebracht werden oder über die über die Umfangsfläche perforierte Stützkonstruktion.

Gemäß einer weiteren vorteilhaften Ausführungsform der Erfindung wird nach dem Einbringen einer Deckschicht in den Hohlraum eine bestimmte Zeit gewartet, bevor die nächste Deckschicht in den Hohlraum eingebracht wird. In dieser Zeit härtet die zuvor in den Hohlraum eingebrachte Deckschicht aus, wobei beispielsweise eine Vernetzung des elastischen Materials stattfindet. Die Länge der Härtezeit bestimmt die spätere Peelfähigkeit der Deckschichten. Je länger die Dauer der Härtezeit gewählt wird, desto leichter sind die Deckschichten später voneinander peelbar. Die optimale Härtezeit bestimmt sich dadurch, dass die Deckschichten leicht voneinander peelbar sind, jedoch noch ausreichend stark aneinander haften, so dass sich die Deckschichten nicht bereits durch den beim Drucken auf der Druckform aufgebrachten Druck während des Druckens voneinander lösen.

In einem zweiten Schritt wird gemäß einer weiteren vorteilhaften Ausführungsform des Verfahrens die Trägerschicht in Form eines schaumartigen, elastischen Materials in den verbleibenden Hohlraum eingebracht. Nachdem die gewünschte Anzahl an Deckschichten in den Hohlraum eingebracht wurden, wird in einem zweiten Schritt eine bestimmte Menge schaumartigen, elastischen Materials in den Hohlraum zwischen der Außenfläche der Stützkonstruktion und der zuletzt in den Hohlraum eingebrachten Deckschicht über Bohrungen in den Ringelementen oder über die perforierte Umfangsfläche der Stützkonstruktion eingebracht, wodurch eine elastische, druckflexible Zwischenschicht aus Schaum gebildet wird.

Nachdem die einzelnen elastischen Materialschichten ausgehärtet wurden, wird die fertige Druckform bestehend aus der Stützkonstruktion, der auf der Stützkonstruktion befindlichen schaumartigen, elastischen Trägerschicht und der auf der Trägerschicht befindlichen Deckschichten aus der Gießform entnommen. Die Druckform kann dann direkt als Druckwalze eingesetzt werden, nachdem mittels eines Lasers die gewünschte Struktur auf die äußere Deckschicht der Druckform eingraviert wurde.

Es gibt nun eine Vielzahl von Möglichkeiten, die erfindungsgemäße nahtlose Druckform und das erfindungsgemäße Verfahren zur Herstellung einer nahtlosen Druckform für den Rotationsdruck auszugestalten und weiterzubilden. Hierzu wird beispielsweise verwiesen einerseits auf die den Patentansprüche 1 und 6 nachgeordneten Patentansprüchen und andererseits auf die Beschreibung eines Ausführungsbeispiels in Verbindung mit der Zeichnung.

In der Zeichnung zeigt
- Fig. 1: einen Längsschnitt eines Ausführungsbeispiels einer erfindungsgemäßen zylinderförmigen Gießform mit einer in der Gießform angeordneten zylinderförmigen Stützkonstruktion, zwei Ringelementen und mit einem sich dadurch bildenden Hohlraum,
- Fig. 2: eine perspektivische Ansicht eines Ausführungsbeispiels einer erfindungsgemäßen Druckform mit Durchgangsbohrungen in den Ringelementen,
- Fig. 3: eine perspektivische Ansicht eines Ausführungsbeispiels einer erfindungsgemäßen Druckform mit einer über der Umfangsfläche perforierten Stützkonstruktion.

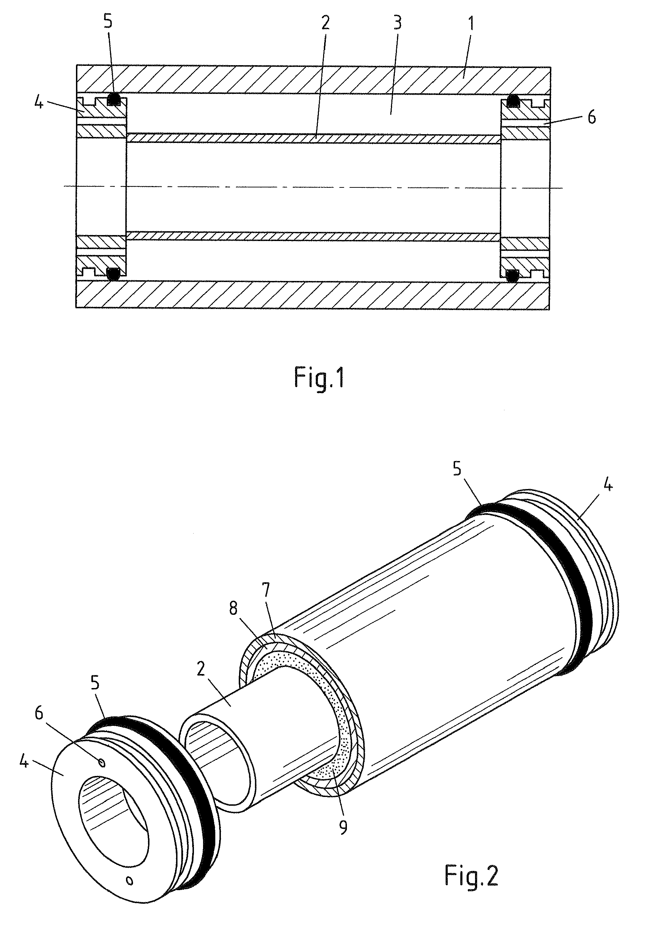

In Fig. 1 ist ein Längsschnitt eines Ausführungsbeispiels einer erfindungsgemäßen zylinderförmigen Gießform 1 dargestellt, in der eine zylinderförmige Stützkonstruktion 2 koaxial in die Gießform 1 eingebracht ist, wobei ein Hohlraum 3 zwischen der Außenfläche der Stützkonstruktion 2 und der Innenwand der Gießform 1 erzeugt wird, und der Hohlraum 3 durch jeweils ein an den Enden der Stützkonstruktion 2 angebrachtes Ringelement 4 seitlich abgeschlossen wird. Zur Abdichtung des Hohlraums 3 sind zwischen der Gießform 1 und den Ringelementen 4 Dichtungen 5 vorgesehen. In dem in der Fig. 1 dargestellten Ausführungsbeispiels weisen die Ringelemente 4 jeweils zwei über den Querschnitt angeordnete Durchgangsbohrungen 6 auf, über die das elastische Material in den Hohlraum 3 eingebracht wird.

Die Ringelemente 4 können aber auch jeweils mehr als zwei Durchgangsbohrungen 6 aufweisen.

In einem ersten Schritt werden die einzelnen Deckschichten 7, 8 nacheinander in den Hohlraum 3 eingebracht, wobei zunächst für die erste Deckschicht 7 ein elastisches Material, vorzugsweise Silikon, in einer bestimmten, zumindest den Hohlraum 3 nicht ausfüllenden Menge in den Hohlraum 3 eingebracht wird. Anschließend wird die Gießform 1 zusammen mit der Stützkonstruktion 2 in Rotation versetzt, so dass sich durch die Zentrifugalkraft das elastische Material an der Innenfläche der Gießform 1 gleichmäßig verteilt. Anschließend wird die so hergestellte erste elastische Deckschicht 7 ausgehärtet. Nach einer bestimmten Aushärtezeit wird eine zweite Schicht 8 an elastischem Material in den Hohlraum 3 in einer den Hohlraum 3 nicht ausfüllenden Menge eingebracht. Die Gießform 1 wird wiederum zusammen mit der Stützkonstruktion 2 in Rotation versetzt, so dass sich aufgrund der Zentrifugalkraft das elastische Material an der Innenfläche der zuvor eingebrachten ersten Deckschicht 7 gleichmäßig verteilt. Anschließend wird die so hergestellte zweite elastische Deckschicht 8 ebenfalls ausgehärtet. Auf diese Art und Weise können beliebig viele Deckschichten 7, 8 hergestellt werden.

Die Länge der Aushärtezeit ist wichtig für die Einstellung der Peelfähigkeit der einzelnen Deckschichten 7, 8. Je länger die Aushärtezeit gewählt wird, desto besser können die Deckschichten 7, 8 später voneinander abgepeelt werden. Allerdings darf die Aushärtezeit nicht zu lange gewählt werden, da die Deckschichten 7, 8 dann nicht mehr die erforderliche Haftung aufweisen, die benötigt wird, damit sich die Deckschichten 7, 8 nicht bereits während des Einsatzes der Druckformen auf Grund des auf der Druckform lastenden Druckes beim Bedrucken voneinander lösen. Bei der Bestimmung der optimalen Aushärtezeit ist ebenfalls die in dem Hohlraum während der Herstellung der Deckschichten 7, 8 herrschende Temperatur zu berücksichtigen.

Ist die gewünschte Anzahl der Deckschichten 7, 8 in dem Hohlraum 3 ausgeformt worden, wird in einem zweiten Schritt die Trägerschicht 9 aufgebracht, wobei ein schaumartiges, elastisches Material, vorzugsweise Silikon, in flüssiger Form über die Durchgangsbohrungen 6 in den Ringelementen 4 in den verbleibenden Hohlraum 3 zwischen der Außenfläche der Stützkonstruktion 2 und der Innenfläche der zuletzt in den Hohlraum 3 eingebrachten Deckschicht 8 eingebracht wird. Innerhalb des Hohlraumes 3 schäumt das in flüssiger Form eingebrachte elastische Material auf. Durch Rotation der Gießform 1 zusammen mit der Stützkonstruktion 2 wird das schaumartige, elastische Material gleichmäßig in dem Hohlraum 3 verteilt und anschließend ausgehärtet.

Nachdem die letzte Schicht, die Trägerschicht 9, in den Hohlraum 3 eingebracht wurde, werden die Durchgangsbohrungen 6 dicht verschlossen. Dies geschieht entweder durch das in den Durchgangsbohrungen 6 verbleibende, auf Grund des Kontaktes mit der Umgebungsluft vorzeitig aushärtende, schaumartige Material selbst oder durch in den Durchgangsbohrungen 6 eingesetzte Stopfen. Dadurch wird verhindert, dass Material aus dem Hohlraum 3 entweicht, wodurch erreicht wird, dass die Härte und die Dichte des Schaums genau eingestellt werden können.

Die fertige Druckform wird aus der Gießform 1 entnommen und anschließend wird mittels eines Lasers die gewünschte Struktur bzw. das gewünschte Druckmotiv zunächst in die äußerste Deckschicht 7 eingraviert.

In Fig. 2 ist die perspektivische Ansicht eines Ausführungsbeispiels einer erfindungsgemäßen nahtlosen Druckform für den Rotationsdruck, insbesondere für den Flexodruck, mit einer Stützkonstruktion 2, mit einer auf der Stützkonstruktion 2 angeordneten elastischen, schaumartigen Trägerschicht 9 und mit zwei auf der Trägerschicht 9 angeordneten elastischen Deckschichten 7, 8 dargestellt. Zusätzlich kann zwischen den einzelnen Deckschichten jeweils eine Peelschicht angeordnet sein (hier nicht dargestellt). Die jeweilige Oberfläche der einzelnen Deckschichten 7, 8 weist dabei die erforderliche Glätte auf, so dass diese nicht mehr in einem weiteren Fertigungsschritt, z. B. Schleifen, nachbearbeitet werden müssen.

Soll die Druckform für ein neues Druckmotiv verwendet werden, wird die außenliegende Deckschicht 7 abgezogen und auf die darunter liegende Deckschicht 8 wird ein neues Druckmotiv eingraviert. Die Dicke der Deckschichten 7, 8 beträgt vorzugsweise > 1 mm, wobei die Deckschichten 7, 8 dabei jeweils eine größere Dicke als die Tiefe der auf die jeweilige Deckschichten 7, 8 aufzubringende Gravur aufweisen.

Vorzugsweise entspricht die Dicke der Trägerschicht 9 zusammen mit der Dicke der auf der Trägerschicht 9 angeordneten Deckschicht 8 der Höhe der an den Hohlraum 3 angrenzenden Ringelemente 4, so dass die Deckschicht 8 an der Oberkante der Ringelemente 4 abschließt. Die auf der Deckschicht 8 weiter angeordneten Deckschichten 7 erstrecken sich vorzugsweise von der Oberkante der Ringelemente 4 bis zu der Oberkante der auf den Ringelementen 4 angeordneten Dichtungen 6. Dadurch können die Deckschichten 7 nach dem Entformen leicht, ohne weitere Hilfsmittel, von der auf der Trägerschicht 9 angeordneten Deckschicht 8 abgepeelt werden, da die Deckschichten 7 nicht an dem Metall der Ringelemente 4 anhaften.

Es ist aber beispielsweise auch möglich, dass die Deckschichten 7 ebenfalls an dem Metall der Ringelemente 4 angrenzen. Dann werden beim Abpeelen dieser Deckschichten 7 diese zuvor mit Hilfe beispielsweise eines Trennmessers von den Ringelementen 4 gelöst.

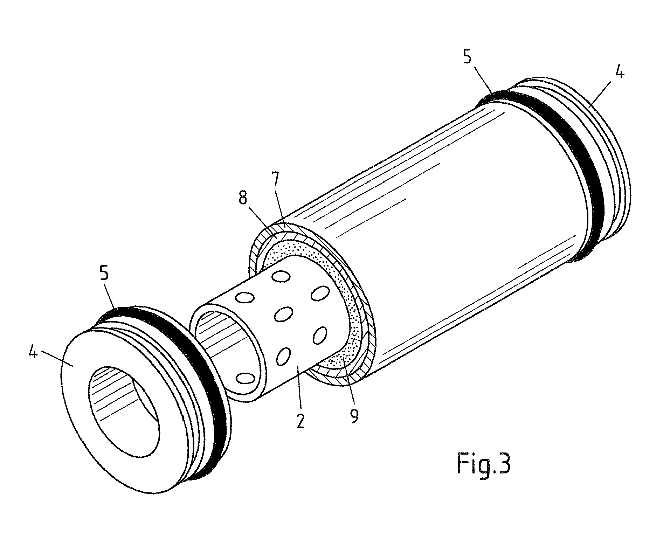

In Fig. 3 ist eine perspektivische Ansicht eines Ausführungsbeispiels einer erfindungsgemäßen Druckform mit einer über der Umfangsfläche perforierten Stützkonstruktion dargestellt. Hierbei wird das elastische Material nicht über die Ringelemente 4, sondern über die über ihre Umfangsfläche perforierte Stützkonstruktion 2 in den Hohlraum 3 eingebracht.

## Patentansprüche

1. Nahtlose Druckform für den Rotationsdruck, insbesondere für den Flexodruck, mit einer Stützkonstruktion (2), mit einer auf der Stützkonstruktion (2) befindlichen elastischen, schaumartigen Trägerschicht (9) und mit mindestens einer auf der Trägerschicht (9) befindlichen elastischen Deckschicht (8),
**dadurch gekennzeichnet, dass**
auf der auf der Trägerschicht (9) befindlichen elastischen Deckschicht (8) mindestens eine weitere elastische Deckschicht (7) angeordnet ist.

2. Nahtlose Druckform für den Rotationsdruck nach Anspruch 1,
**dadurch gekennzeichnet, dass**
die Deckschichten (7, 8) voneinander peelbar sind.

3. Nahtlose Druckform für den Rotationsdruck nach einem der Ansprüche 1 oder 2,
**dadurch gekennzeichnet, dass**
jede Deckschicht (7, 8) eine größere Dicke aufweist als die Gravurtiefe des in die Deckschichten (7, 8) zu gravierenden Druckmotivs.

4. Nahtlose Druckform für den Rotationsdruck nach einem der Ansprüche 1 bis 3,
**dadurch gekennzeichnet, dass**
die Trägerschicht (9) und die Deckschichten (7, 8) aus Silikon bestehen.

5. Nahtlose Druckform für den Rotationsdruck nach einem der Ansprüche 1 bis 4,
**dadurch gekennzeichnet, dass**
zwischen den Deckschichen (7, 8) jeweils eine Peelschicht angeordnet ist.

6. Verfahren zur Herstellung einer nahtlosen Druckform für den Rotationsdruck, insbesondere für den Flexodruck, bei welchem eine zylinderförmige Stützkonstruktion koaxial in eine zylinderförmige Gießform eingebracht wird, wobei ein Hohlraum zwischen der Außenfläche der Stützkonstruktion und der Innenwand der Gießform erzeugt wird, der Hohlraum durch jeweils ein an den Enden der Stützkonstruktion angebrachtes Ringelement seitlich abgeschlossen wird, elastisches Material in Form einer Trägerschicht und mindestens einer Deckschicht in den Hohlraum eingebracht wird und wobei **dadurch**, **dass** die Stützkonstruktion gemeinsam mit der Gießform in Rotation versetzt wird, dass elastische Material aufgrund der Zentrifugalkraft gleichmäßig in dem Hohlraum verteilt wird, insbesondere nach einem der Ansprüche 1 bis 5,
**dadurch gekennzeichnet, dass**
mindestens eine weitere Schicht des elastischen Materials in Form einer Deckschicht in den Hohlraum eingebracht wird.

7. Verfahren nach Anspruch 6,
**dadurch gekennzeichnet, dass**
in einem ersten Schritt die einzelnen Deckschichten jeweils nacheinander in den Hohlraum eingebracht werden, wobei für jeweils eine Deckschicht elastisches Material in den Hohlraum in eine zumindest des Hohlraum nicht ausfüllenden Menge eingebracht wird und die so erhaltende Deckschicht ausgehärtet wird.

8. Verfahren nach einem der Ansprüche 6 oder 7,
**dadurch gekennzeichnet, dass**
nach dem Einbringen einer Deckschicht in den Hohlraum eine bestimmte Zeit gewartet wird, bevor das Material für die nächste Deckschicht in den Hohlraum eingebracht wird.

9. Verfahren nach einem der Ansprüche 6 bis 8,
**dadurch gekennzeichnet, dass**
in einem zweiten Schritt die Trägerschicht in Form eines schaumartigen, elastischen Materials in den verbleibenden Hohlraum eingebracht wird.
